Europäisches Patentamt

European Patent Office

Office européen des brevets

(11) Publication number: **0 512 221 A1**

## EUROPEAN PATENT APPLICATION

(21) Application number: **92104370.9**

(22) Date of filing: **13.03.92**

(51) Int. Cl.⁵: **B62B 7/12**, B60N 2/24

(30) Priority: **08.04.91 GB 9107359**

(43) Date of publication of application:
**11.11.92 Bulletin 92/46**

(84) Designated Contracting States:
**AT BE CH DE DK ES FR GB GR IT LI LU NL SE**

(71) Applicant: **MACLAREN LIMITED**
**Station Works**
**Long Buckby, Northamptonshire NN6**
**7PF(GB)**

(72) Inventor: **Church, Graham**
**Garthside, West Street**
**Moulton, Northampton(GB)**

(74) Representative: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) Baby or infant transporting apparatus.

(57) An apparatus 1 for transporting a baby or infant both in a vehicle and out of the vehicle, for example as a push chair, which comprises a carrier in the form of a seat 2 adapted for mounting in a vehicle, a wheeled frame 3 in which the seat 2 is also adapted to be mounted, with releasably mateable mounting parts 4 on each side of the seat 2 and frame 3 whereby the seat 2 is mounted in a fixed position in the frame 3, and a manually operable mechanism 5 for securing the seat in the fixed position in the frame.

Fig.2.

Rank Xerox (UK) Business Services

The invention relates to apparatus for transporting a baby or infant, particularly such apparatus which is adapted for transporting a baby or infant both in a vehicle and externally thereof.

Baby carriages for babies and infants are known, as are carriers or seats which are usually permanently fixed in a vehicle for transporting a baby or infant in the vehicle which is usually a domestic automobile.

It is often necessary or desirable to transfer the baby or infant from the automobile seat to the baby carriage, and vice versa. Hitherto, it has been necessary to have a car seat and a separate baby carriage in order to achieve this transfer, which is expensive.

It is accordingly an object of the invention to seek to mitigate this disadvantage.

According to the invention there is provided apparatus for transporting a baby or infant, comprising a carrier for the baby or infant, a wheeled frame in which the carrier is adapted to be mounted, released mateable mounting parts on each side of the carrier and frame whereby the carrier is mounted in a fixed position in the frame, and a manually operable mechanism for securing the carrier in the fixed position in the frame.

Using apparatus embodying the invention, the carrier is basically non-adjustable when mounted in the wheeled frame. The releasably mateable mounting parts may comprise complementary tongue and groove parts. This provides an effective and positive mating engagement.

There may be a tongue part with a substantially V-shape on opposite sides of the frame and a groove part of substantially V-shape on opposite sides of the carrier. This provides a relatively simple construction.

The manually operable locking mechanism may comprise retractable means adapted in one position to engage the carrier and in another may be retractable from the carrier to allow removal thereof from the frame. This again provides a relatively simple construction. The means may comprise a plurality of pins mounted under pressure of biasing means operative to urge the pins to the one position. This arrangement provides for a positive locking engagement.

The manually operable mechanism may further comprise a rotatable member on each side of the frame on a side thereof remote from the associated tongue part. This construction provides for ease of use by a user, particularly when the rotatable member may comprise a hand operable knob with a press stud which is depressible to release the knob for rotation.

The rotatable hand operable knob may further comprise a depressible button adapted to retract the pins from engagement with the apertures to allow separation of the tongue and groove. This construction provides a safety feature to obviate accidental unlocking.

The carrier may comprise a one piece moulding including means, preferably slots, at each side adapted for attachment to seat belts of a vehicle. This construction of the carrier is relatively easily made, and used, particularly where the slots are laterally of the carrier and intermediate a back-rest portion thereof. The carrier may be a seat (i.e. with a substantially horizontal portion and a back support portion), or it may be a cot or pram, in which a body can lie supine.

Apparatus for transporting a baby or infant is diagramatically illustrated, by way of example, with reference to the accompanying drawings.

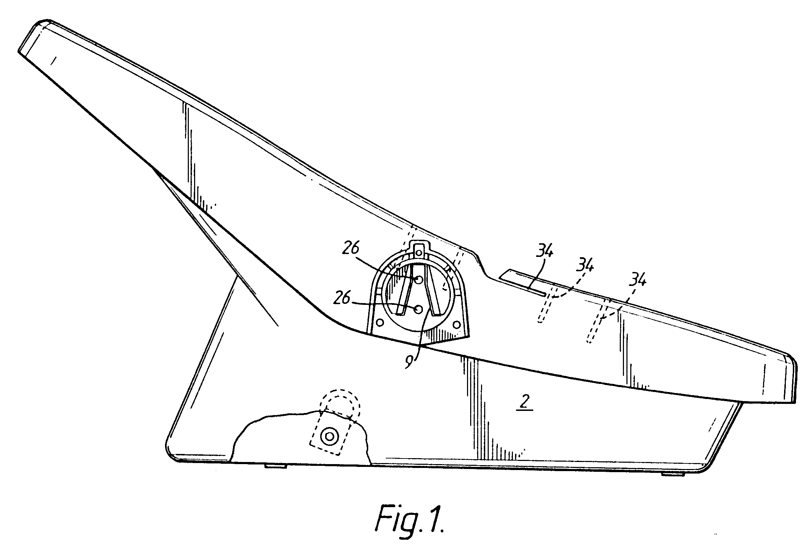

Fig.1 is a side elevational view of a baby or infant seat of apparatus according to the invention;

Fig.2 is a side elevational view of the seat of Fig.1, mounted in a wheeled frame, of apparatus according to the invention;

Fig.3 is a side elevational view of a part indicated 'Z' of Fig.2, to an enlarged scale as compared with Fig.2;

Fig.4 is a transverse sectional view of the Part of Fig.3, taken on the line III-III of Fig.3;

Fig.5 is a transverse sectional view taken on the line IV-IV of Fig.3;

Figs. 6 and 6A show respective rear and front perspective views of the seat of Fig.1 mounted in an automobile;

Fig.7 is a perspective view from the rear of the seat of Fig.1;

Fig.8 is a view of a seat belt of an automobile in which the seat is mounted;

Fig.9 is a perspective view of Fig.1 bearing a child and being moved into or out of an automobile;

Fig.10 is a view of the seat belt of Fig.8, in an operative position;

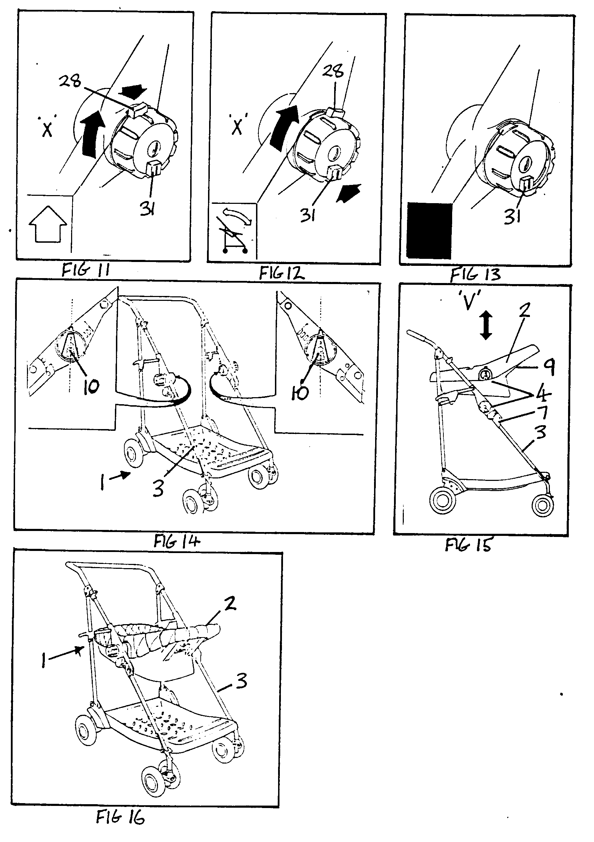

Figs. 11 to 13 show respectively perspective views of a manually operable mechanism of the wheeled frame;

Fig.14 is a perspective view of a wheeled frame according to the invention, with inserts showing enlarged elevational views of mating parts on each side of the wheeled frame;

Fig.15 is a side elevational view of a seat and wheeled frame according to the invention showing mounting and dismounting of the seat from the wheeled frame; and

Fig.16 shows a perspective view of the seat mounted in the wheeled frame.

Referring to the drawings, there is shown apparatus 1 for transporting a baby or infant both in a vehicle and externally thereof, comprising a carrier in the form of a seat 2 adapted for mounting in a vehicle, a wheeled frame 3 in which the seat 2 is also adapted to be mounted, releasably mateable mounting parts 4 on each side of the seat 2 and frame 3 whereby the seat 2 is mounted in a fixed position in the frame 3, and a manually operable mechanism 5 for securing the seat in the fixed position in the frame.

The frame 2 has generally triangular shaped opposite side frames 6 which are each "breakable" or foldable about a pivot point 7 so that when the seat 2 is removed, the frame 3 can be collapsed from an erected position by folding about the pivot point so that an upper (as considered in use) handle part overlies a lower part, a latch 8 being used to lock the frame in the erected position.

The releasably mateable mounting parts 4 comprise complementary tongue and groove parts in the form of fixed plastic blocks on opposite sides of the seat 2 bearing V-shaped grooves 9 of dovetail shape and movable plastic mounting blocks on opposite (inner in use) sides of the frame in the form of V-shaped tongues 10 of dovetail configuration. The dovetail tongues and grooves 9 and 10 can thus be interengaged to mount the seat 2 in the frame 3. The grooves and tongues are symmetrical about the vertical and located centrally of the seat. This enables the seat to be mounted in the frame facing forwards or backwards and it is evenly balanced about the mounting. In order to secure the seat 2 in the frame 3 the locking mechanism 5 comprises retractable means in the form of a plurality, in this case of two, pins 11 which in one position are adapted to engage the seat 2 and in another are retractable from the seat to allow removal of the seat 2 from the frame 3.

The mechanism 5 also comprises a member or manually grippable knob 12 which is mounted on a plastic housing 13, 14 connecting elongate side member 15, 16 of the triangular side frames 6.

The knob 12 is mounted for rotation with respect to the housing 14 by a spindle 17 having a head 18 seated in a recess 19 and having at the opposite end a head 20 which holds the dovetail tongue part 10 in position, the tongue part 10 having serrations 21 which mate with serrations 22 of the housing for locking the dovetail tongue part in a desired position which in the embodiment is substantially vertical.

Around the spindle 17 there is biassing means in the form of a coil spring 23 which bears on the tongue part and on an internal shoulder of a hollow member 24 which has a head 25 at one end adjacent the shoulder, and which is formed integrally with the pins 11 which are reciprocable in aligned apertures 26 of the dovetail tongue 9.

The knob 12 has a slot in its circumference in which is mounted, under pressure of biassing means in the form of a leaf spring 27, a press stud 28. The press stud 28 acts on a plunger 29 with a latch 30 which latches behind the head 25. The knob 12 also has a depressible button 31 mounted under pressure of biassing means in the form of a coil spring 32 mounted in a well in the housing 13.

The knob 12 has indicating means in the form of colour coding or indicia indicating different operating positions of the mechanism.

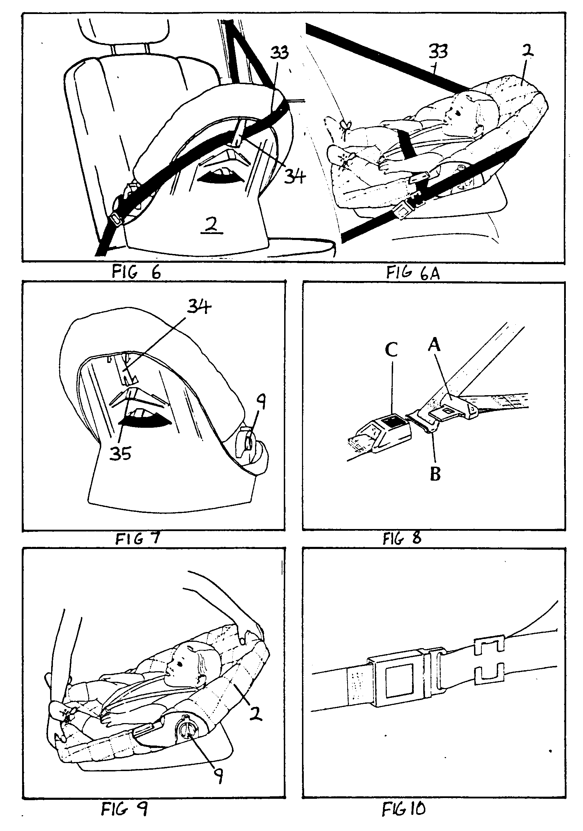

In use of the apparatus 1, assuming the seat 2 is in position in a vehicle, Figs. 5, 6 and 6A, the seat which is a one piece moulding of plastic, is secured on the rear vehicle seat by the car seat belts 33, which belts pass through integral slots 34 of the seat 2, which has an integral handle 35. The seat and a baby in it faces the rear of the vehicle seat. The wheeled frame 3 is folded up in the boot of the vehicle.

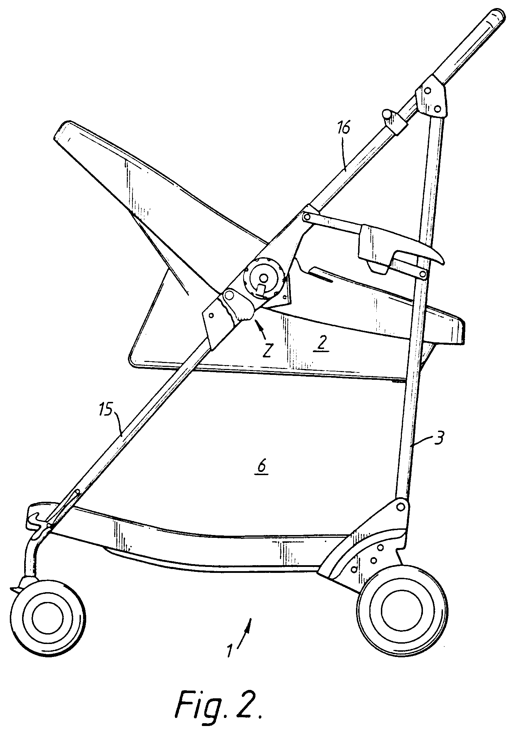

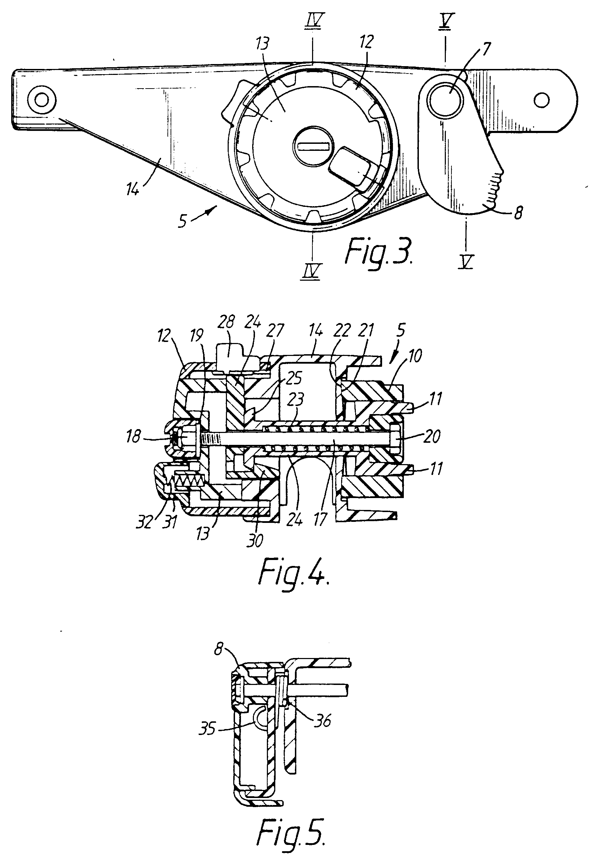

If now it is desired to remove the seat 2 for transport in the wheeled frame 3, having reached the destination of the vehicle, the seat belts 33 are unfastened and the seat 2, with the baby in it, and with the frame 3 erected and locked in position with the latch 8, can be mounted in the frame 3. To accomplish this, the dovetail tongues 10 of the frame 3 are checked to see that they are pointing in a substantially vertical direction with their narrowest part uppermost (in use). If they are not, the press stud 28 is depressed so as to release it from the slot and to release the latch 30 from the head 25 so that the knob 12 can be rotated manually clockwise to align the tongues vertically, arrow 'X' Fig.s 11 & 12 this position being shown by one coloured indicia on the knob (Fig.12), the knob moving a slight distance from the housing to accommodate them. The knob 12 is rotated further clockwise to move it there further from the housing Fig.13, in which position the spring 23 moves the hollow member 24 and hence the pins 11 in a direction to rectract the pins into the tongue 9. Then with the seat facing the rear of the frame, as shows in Figs 2, 15 and 16, it is lowered substantially vertically, arrow 'V' Fig.15 so that the dovetail tongues 10 engage in the complementary grooves 9 at the sides of the seat 2. With the tongues 10 and grooves 9 fully located, the seat 2 is steadied with one hand whilst the knobs 12 are rotated in turn fully anticlockwise from the Fig.13 to the Fig.11 position when the pins 11 are extended to engage in the facing apertures 26 in the grooves 9 so firmly mounting the seat 2 in the frame 3, which can then be used together as a push chair. In this position, the press stud 28 is locked in the slot so that the knob 12 cannot be turned. To remove the seat 2 from the frame 3, the seat 2 is steadied, and the press stud 28 on one side is depressed against its spring and the knob is simultaneously rotated clockwise (in the direction of the arrows) to the Fig. 12 position. The button 31 is then depressed, arrow 'Y' Fig.12 against the pressure of its spring 32, and the knob 12 is then continued in rotation clockwise so that the knob 12 moves out from the housing 13, 14, this movement pulling the hollow member and hence the pins 11 to the left (fig 4) to remove the pins 11 from the apertures 26 in the grooves 9. The action is repeated on the other side, and the seat can then be lifted vertically clear of the frame 3.

The member 28 and button 31 thus provide a safety feature as both have to be operated to remove the seat 2 from the frame 3.

The latch 8 is a manually portable member which is biassed to a latching position by a spring 35, the latch being in one part of the housing for engaging with a fixed part 36 on the other part.

It will be understood that the apparatus 1 described with reference to the drawings provides ease of use and minimum disturbances to a baby during transfer between the different modes.

## Claims

1. Apparatus for transporting a baby or infant, comprising a carrier for the baby or infant, a wheeled frame in which the carrier is adapted to be mounted, releasably mateable mounting parts on each side of the carrier and frame whereby the carrier is mounted in a fixed position in the frame, and a manually operable mechanism for securing the carrier in the fixed position in the frame.

2. Apparatus according to Claim 1, the releasably mateable mounting parts comprising complementary tongue and groove parts.

3. Apparatus according to Claim 2, there being a tongue part with a substantially V-shape on opposite sides of the frame and a groove part of substantially V-shape on opposite sides of the carrier.

4. Apparatus according to Claim 3, the manually operable locking mechanism comprising retractable means adapted in one position to engage the carrier and in another being retractable from the carrier to allow removal thereof from the frame.

5. Apparatus according to Claim 4, the means comprising a plurality of pins mounted under pressure of biassing means operative to urge the pins to the one position.

6. Apparatus according to Claim 5, the manually operable mechanism further comprising a rotatable member on each side of the frame on a side thereof remote from the associated tongue part.

7. Apparatus according to Claim 6, the rotatable member comprising a hand operable knob with a press stud which is depressible to release the knob for rotation.

8. Apparatus according to Claim 7, the rotatable hand operable knob further comprising a depressible button adapted to retract the pins from engagement with the apertures to allow separation of the tongue and groove.

9. Apparatus according to any preceding claim, the carrier comprising a seat adapted for mounting in a vehicle.

10. Apparatus according to Claim 9, the seat comprising a one piece moulding including means at each side adapted for attachment to seat belts of a vehicle.

11. Apparatus according to Claim 10, the means comprising slots.

12. Apparatus according to Claim 11, the slots being laterally of this seat and intermediate a back-rest portion thereof.

13. Apparatus according to any preceding claim, wherein the carrier comprises a seat.

14. Apparatus for transporting a baby or infant, substantially as hereinbefore described with reference to the accompanying drawings.

15. Apparatus for transporting a baby or infant both in a vehicle and externally thereof, substantially as hereinbefore described with reference to the accompanying drawings.

26

34

26

34

34

9

2

Fig.1.

Fig. 2.

Fig.3.

Fig.4.

Fig.5.

FIG 6

FIG 6A

FIG 7

FIG 8

FIG 9

FIG 10

FIG 11

FIG 12

FIG 13

FIG 14

FIG 15

FIG 16

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | EP-A-0 339 890 (HESTAIR MACLAREN LTD.) * column 5, line 31 - column 7, line 16; figures 3,12-17 * | 1-6,8,9,13-15 | B 62 B 7/12 B 60 N 2/24 |
| A | | 7,10 | |
| | --- | | |
| X | GB-A-2 208 109 (R.BUSHELL) * the whole document * | 1,4,9,13-15 | |
| A | | 10,11 | |
| | --- | | |
| X | FR-A-2 260 481 (UNILANDO) * page 7, line 1 - line 10; figures 1-6 * | 1,4,9,13-15 | |
| A | | 10 | |
| | --- | | |
| A | EP-A-0 271 422 (JANE,SA) * column 4, line 32 - column 5, line 29; figures 3,5-9 * | 1,6,7 | |
| | ----- | | |

TECHNICAL FIELDS
SEARCHED (Int. Cl.5)

B 62 B
B 60 N

The present search report has been drawn up for all claims

| Place of search | Date of completion of the search | Examiner |
|---|---|---|
| THE HAGUE | 15-07-1992 | CZAJKOWSKI A.R. |